# EUROPÄISCHE PATENTANMELDUNG

(11) **EP 3 731 386 A1**
(43) Veröffentlichungstag der Anmeldung: **28.10.2020**
(21) Anmeldenummer: 19170510.2
(22) Anmeldetag: 23.04.2019
(51) Int. Cl.: H02K 15/02, H02K 11/215

(54) **ELEKTRISCHE MASCHINE MIT ADDITIV HERGESTELLTER MASSVERKÖRPERUNG EINES SENSORS AUF DEM ROTOR**

(71) Anmelder: Siemens Aktiengesellschaft, 80333 München (DE)
(72) Erfinder: Amarell, Jens, 90765 Fürth (DE); Grimm, Sandro, 98617 Meiningen (DE); Reinhart, Erwin, 91052 Erlangen (DE)

(57) **Zusammenfassung**

Eine elektrische Maschine (1) weist einen Rotor (2) und einen Stator (3) auf. Der Rotor (2) ist drehfest auf einer in Lagern (5) gelagerten Rotorwelle (4) angeordnet, so dass der Rotor (2) zusammen mit der Rotorwelle (3) um eine Rotationsachse (6) rotierbar ist. Die elektrische Maschine (1) weist weiterhin ein Gehäuse (7) auf, das einen um die Rotationsachse (6) umlaufenden Mantel (8) und an den Enden des Mantels (8) zwei im Wesentlichen orthogonal zur Rotationsachse (6) orientierte Stirnelemente (9, 10) aufweist, so dass das Gehäuse (7) einen Innenraum (11) begrenzt, innerhalb dessen der Rotor (2) und der Stator (3) angeordnet sind. Der Rotor (2) weist an seinen axialen Enden jeweils einen Abschlussring (13, 14) auf. Auf einen der Abschlussringe (13, 14) ist mittels eines additiven Herstellungsverfahrens eine Maßverkörperung (15) aufgebracht. Am Gehäuse (7) oder am Stator (3) ist innerhalb des von dem Gehäuse (7) begrenzten Innenraums (11) eine mit der Maßverkörperung (15) zusammenwirkende Sensoreinrichtung (16) angeordnet, mittels derer die Drehstellung (ϕ) und/oder die Drehzahl (n) des Rotors (2) ermittelbar ist.

## Beschreibung

Die vorliegende Erfindung geht aus von einer elektrischen Maschine,
- wobei die elektrische Maschine einen Rotor und einen Stator aufweist,
- wobei der Rotor drehfest auf einer in Lagern gelagerten Rotorwelle angeordnet ist, so dass der Rotor zusammen mit der Rotorwelle um eine Rotationsachse rotierbar ist,
- wobei die elektrische Maschine ein Gehäuse aufweist, das einen um die Rotationsachse umlaufenden Mantel und an den Enden des Mantels zwei im Wesentlichen orthogonal zur Rotationsachse orientierte Stirnelemente aufweist, so dass das Gehäuse einen Innenraum begrenzt, innerhalb dessen der Rotor und der Stator angeordnet sind,
- wobei der Rotor an seinen axialen Enden jeweils einen Abschlussring aufweist.

Wenn elektrische Maschinen lage-, momenten- oder drehzahlgeregelt betrieben werden sollen, sind Sensorsysteme erforderlich, welche die Lage (= Drehstellung) des Rotors der elektrischen Maschine erfassen können. In der Regel geschieht dies mittels eigenständiger Lagegeber, welche an einem axialen Ende der elektrischen Maschine an die elektrische Maschine angebaut werden. Derartige Gebersysteme benötigen einen erheblichen Bauraum, müssen gewartet werden und sind teuer. Je nach Bauart und Einsatzzweck müssen sie darüber hinaus besonders geschützt werden, insbesondere in einer entsprechend hohen Schutzart (beispielsweise IP 54).

Aus der EP 3 088 849 A2 ist ein Sensorsystem bekannt, bei welchem eine Maßverkörperung, die nach einem magnetischen Wirkprinzip arbeitet, mittels eines additiven Herstellungsverfahrens auf ein rotierendes, lastübertragendes Element aufgebracht ist. Das magnetische Wirkprinzip kann das Reluktanzprinzip sein.

Aus der EP 3 373 424 A1 ist ein Rotor einer elektrischen Maschine bekannt, bei welcher die Abschlussringe des Rotors mittels eines additiven Herstellungsverfahrens hergestellt sind.

Aus der WO 2015/091 727 A1 ist eine Getriebekonstruktion bekannt, bei der auf einem Zahnrad des Getriebes mittels eines additiven Herstellungsverfahrens eine Maßverkörperung eines Sensors aufgebracht ist.

Die Aufgabe der vorliegenden Erfindung besteht darin, eine elektrische Maschine zu schaffen, mittels derer auf einfache, kostengünstige und zuverlässige Weise ein für eine Lage-, Momenten- oder Drehzahlregelung geeignetes Sensorsignal erfassbar ist.

Die Aufgabe wird durch eine elektrische Maschine mit den Merkmalen des Anspruchs 1 gelöst. Vorteilhafte Ausgestaltungen der elektrischen Maschine sind Gegenstand der abhängigen Ansprüche 2 bis 8.

Erfindungsgemäß wird eine elektrische Maschine der eingangs genannten Art dadurch ausgestaltet,
- dass auf einen der Abschlussringe mittels eines additiven Herstellungsverfahrens eine Maßverkörperung aufgebracht ist und
- dass am Gehäuse oder am Stator innerhalb des von dem Gehäuse begrenzten Innenraums eine mit der Maßverkörperung zusammenwirkende Sensoreinrichtung angeordnet ist, mittels derer die Drehstellung und/oder die Drehzahl des Rotors ermittelbar ist.

Dadurch wird ein robuster, einfacher, kostengünstiger und kompakter Sensor geschaffen, der bereits innerhalb der elektrischen Maschine angeordnet ist. Aufgrund seiner Integration in den Innenraum der elektrischen Maschine bedarf der Sensor keines Schutzes, der über den Schutz hinausgeht, den die elektrische Maschine selbst aufweist.

Vorzugsweise umfasst die Sensoreinrichtung einen mit der Maßverkörperung zur Erfassung eines Empfangssignal zusammenwirkenden Sensor. Der Sensor kann beispielsweise als Wicklung ausgebildet sein. Dadurch kann im Falle eines magnetischen Wirkprinzips das Empfangssignal mit einem hohen Signal-Rausch-Verhältnis erfasst werden.

Vorzugsweise ist vorgesehen,
- dass die Sensoreinrichtung ein Anregungselement und einen Sensor aufweist,
- dass die Maßverkörperung aus einem mittels des Anregungselementes anregbaren Material besteht,
- dass die Maßverkörperung mittels des Anregungselementes angeregt wird und
- dass mittels des Sensors ein Empfangssignal erfasst wird, aus dem die die Drehstellung und/oder die Drehzahl des Rotors ermittelbar ist.

Prinzipiell ist eine Ausbildung der Maßverkörperung als kapazitive Maßverkörperung möglich. Vorzugsweise ist jedoch vorgesehen, dass die Maßverkörperung aus einem magnetisierbaren, aber nicht permanentmagnetischen Material besteht. In diesem Fall wird die Maßverkörperung mittels des Anregungselementes magnetisiert. Aufgrund der Magnetisierung der Maßverkörperung durch das Anregungselement ist es nicht erforderlich, auf den Abschlussring mittels des additiven Herstellungsverfahrens permanentmagnetische Materialien aufzubringen.

Es ist möglich, dass die elektrische Maschine als Asynchronmaschine ausgebildet ist. In diesem Fall sind die Abschlussringe als Kurzschlussringe ausgebildet. Alternativ ist es möglich, dass die elektrische Maschine als Synchronmaschine ausgebildet ist. In diesem Fall sind die Abschlussringe als Druckringe ausgebildet.

Vorzugsweise sind die Abschlussringe selbst ebenfalls mittels eines additiven Herstellungsverfahrens hergestellt. Dadurch gestaltet sich die Konstruktion des Rotors einfacher.

Die Abschlussringe bestehen in der Regel aus Kupfer oder Aluminium. Die Maßverkörperung besteht, sofern sie magnetisierbar ist, aus einem ferromagnetischen Material. Anderenfalls kann sie beispielsweise aus Kupfer oder Aluminium bestehen.

Vorzugsweise ist die Sensoreinrichtung zum Stator hin mittels einer Schutzwand elektromagnetisch abgeschirmt. Dadurch kann der Betrieb der elektrischen Maschine die Sensoreinrichtung nicht beeinflussen und stören.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Längsschnitt durch eine elektrische Maschine,
- FIG 2: eine perspektivische Darstellung eines Rotors,
- FIG 3: eine Sensoreinrichtung und in abgerollter Darstellung eine Maßverkörperung und
- FIG 4: eine Draufsicht auf einen Rotor in Axialrichtung.

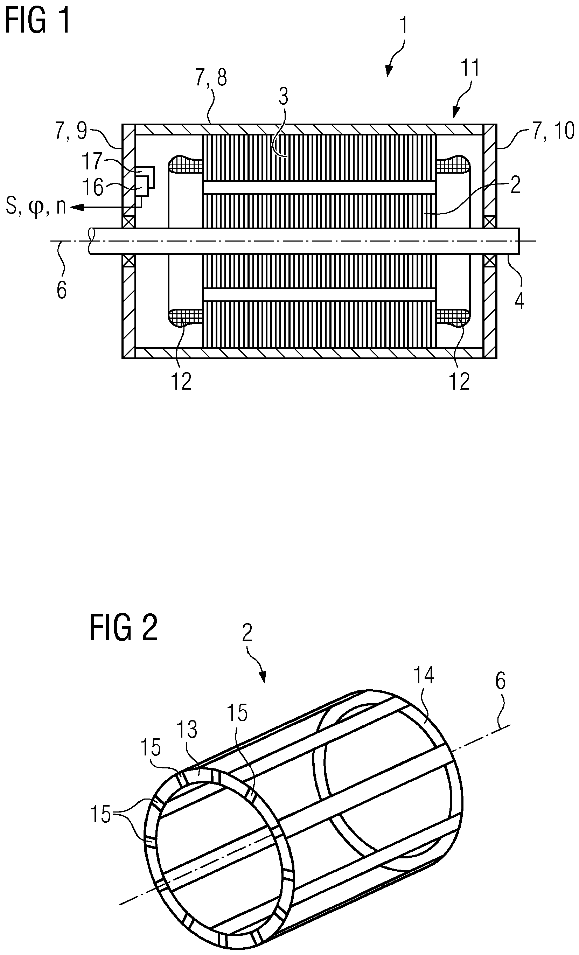

Gemäß FIG 1 weist eine elektrische Maschine 1 einen Rotor 2 und einen Stator 3 auf. Der Rotor 2 ist drehfest auf einer Rotorwelle 4 angeordnet. Die Rotorwelle 4 ist in Lagern 5 gelagert und dadurch um eine Rotationsachse 6 rotierbar. Zusammen mit der Rotorwelle 4 rotiert auch der Rotor 2, und zwar jeweils um den gleichen Drehwinkel wie die Rotorwelle 4. Die Bauart der elektrischen Maschine 1 kann nach Bedarf sein. Vorzugsweise ist die elektrische Maschine 1 als Induktionsmaschine oder als Reluktanzmaschine ausgebildet.

Soweit nachfolgend die Begriffe "axial", "radial" und "tangential" verwendet werden, sind sie stets auf die Rotationsachse 6 bezogen. "Axial" bezeichnet eine Richtung parallel zur Rotationsachse 6. "Radial" bezeichnet eine Richtung in einer orthogonal zur Rotationsachse 6 orientierten Ebene direkt auf die Rotationsachse 6 zu oder von ihr weg. "Tangential" bezeichnet eine Richtung, die innerhalb der orthogonal zur Rotationsachse 6 orientierten Ebene orthogonal zur Radialrichtung orientiert ist. "Tangential" bezeichnet also eine Richtung, die bei einer konstanten Axialposition in einem konstanten radialen Abstand von der Rotationsachse 6 kreisförmig um die Rotationsachse 6 herum gerichtet ist.

Die elektrische Maschine 1 weist weiterhin ein Gehäuse 7 auf. Das Gehäuse 7 weist seinerseits einen Mantel 8 und Stirnelemente 9, 10 auf. Der Mantel 8 läuft tangential um die Rotationsachse 6 um. Die Stirnelemente 9, 10 sind an den axialen Enden des Mantels 8 angeordnet. Sie verlaufen im Wesentlichen orthogonal zur Rotationsachse 6. Das Gehäuse 7 begrenzt somit einen Innenraum 11. Der Innenraum 11 ist oftmals im Wesentlichen zylindrisch ausgebildet. Dies ist aber nicht zwingend erforderlich. Innerhalb des Innenraums 11 sind der Rotor 2 und der Stator 3 angeordnet.

Der Stator 3 weist ein Statorwicklungssystem auf. Das Statorwicklungssystem ist in Nuten des Stators 3 angeordnet. Die Nuten sind in den FIG nicht dargestellt. Vom Statorwicklungssystem sind in FIG 1 nur die beiden Wicklungsköpfe 12 an den beiden axialen Enden des Stators 3 erkennbar.

Der Rotor 2 weist gemäß FIG 2 an seinen axialen Enden jeweils einen Abschlussring 13, 14 auf. Auf einen der Abschlussringe 13, 14 - hier den Abschlussring 13 - ist eine Maßverkörperung 15 aufgebracht. Die Maßverkörperung 15 ist mittels eines additiven Herstellungsverfahrens auf den Abschlussring 13 aufgebracht. Sie besteht vorzugsweise aus einem ferromagnetischen Material. Je nach Wirkprinzip der kann die Maßverkörperung 15 aber auch aus Kupfer oder Aluminium bestehen. Die Maßverkörperung 15 wirkt mit einer Sensoreinrichtung 16 (FIG 1) zusammen. Die Sensoreinrichtung 16 ihrerseits ist entsprechend der Darstellung in FIG 1 am Gehäuse 7 oder am Stator 3 angeordnet und damit innerhalb des von dem Gehäuse 7 begrenzten Innenraums 11. Die Sensoreinrichtung 16 ist statorfest angeordnet, das heißt, dass sie sich beim Rotieren des Rotors 2 nicht mit dreht. Die Befestigung kann nach Bedarf durch Kleben, Stecken, Verschrauben, Verrasten usw. erfolgen. Vorzugsweise ist die Sensoreinrichtung 16 zum Stator 3 hin mittels einer Schutzwand 17 elektromagnetisch abgeschirmt. Dies gilt insbesondere dann, wenn die Sensoreinrichtung 16 direkt am Stator 3 angeordnet ist. Die Sensoreinrichtung 16 kann insbesondere gebogen ausgebildet sein, so dass sie großflächig an dem statorfesten Element anliegt, an dem sie angeordnet ist.

In vielen Fällen wirkt die Maßverkörperung 15 mit der Sensoreinrichtung 16 magnetisch zusammen. Entsprechende Prinzipien sind Fachleuten allgemein bekannt und müssen daher nicht im Detail erläutert werden. Beispielsweise können die Maßverkörperung 15 und die Sensoreinrichtung 16 nach dem Reluktanzprinzip oder nach dem Induktionsprinzip miteinander zusammenwirken. Es ist aber auch ein kapazitives Zusammenwirken möglich. Durch das Zusammenwirken der Maßverkörperung 15 und der Sensoreinrichtung 16 kann die Sensoreinrichtung 16 ein Sensorsignal S ermitteln, das die Drehstellung ϕ und/oder die Drehzahl n des Rotors 2 widerspiegelt.

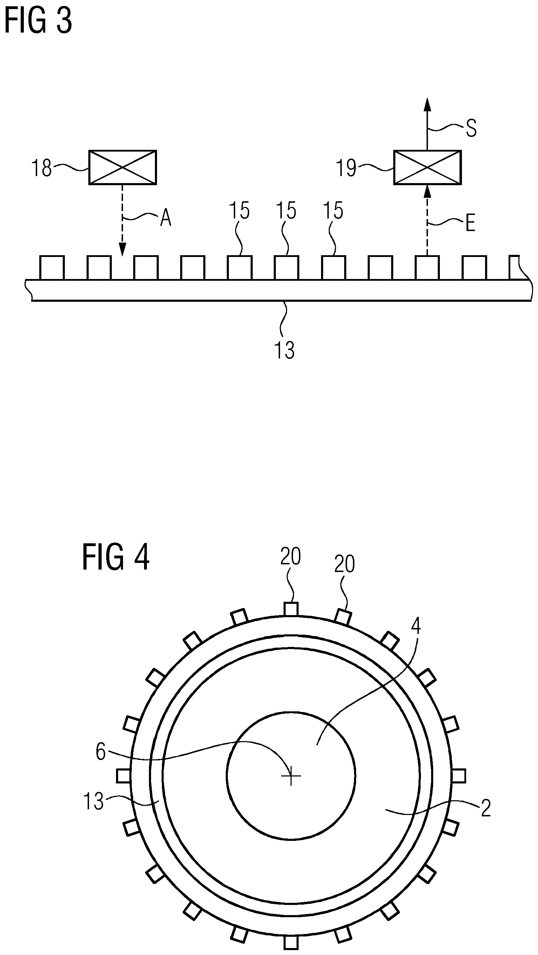

Entsprechend der Darstellung in FIG 3 kann die Sensoreinrichtung 16 ein Anregungselement 18 und einen Sensor 19 aufweisen. In diesem Fall besteht die Maßverkörperung 15 aus einem mittels des Anregungselements 18 anregbaren Material, beispielsweise im Falle eines magnetischen Wirkprinzips aus einem magnetisierbaren, aber nicht permanentmagnetischen Material. Die Maßverkörperung 15 kann im Rahmen der Ausgestaltung gemäß FIG 4 beispielsweise als Ringjoch ausgebildet sein, von dem ausgehend Zähne 20 nach radial außen ragen. Derartige Materialien sind Fachleuten allgemein bekannt. Im Falle der Ausgestaltung gemäß FIG 3 wird die Maßverkörperung 15 von dem Anregungselement 18 mittels eines Anregungssignals A angeregt, beispielsweise magnetisiert. Der Sensor 19 empfängt aufgrund der Anregung der Maßverkörperung 15 durch das Anregungssignal A ein Empfangssignal E. Das Empfangssignal E ist, wenn der Rotor 2 rotiert, entsprechend moduliert. Der Sensor 19 ist dadurch in der Lage, anhand des Empfangssignals E das Sensorsignal S zu ermitteln.

Entsprechend der Darstellung in FIG 3 kann der Sensor 19 als Wicklung ausgebildet sein. Diese Ausgestaltung ist auch dann realisierbar, wenn die Sensoreinrichtung 16 im Falle eines magnetischen Wirkprinzips kein Anregungselement 18 umfasst. Auch in diesem Fall wirkt der Sensor 19 mit der Maßverkörperung 15 zusammen.

Die elektrische Maschine 1 kann als Asynchronmaschine ausgebildet sein. In diesem Fall sind die Abschlussringe 13, 14 als Kurzschlussringe ausgebildet. Alternativ kann die elektrische Maschine 1 als Synchronmaschine ausgebildet sein. In diesem Fall sind die Abschlussringe 13, 14 als Druckringe ausgebildet. Die entsprechenden Ausgestaltungen einer Asynchronmaschine bzw. einer Synchronmaschine sind Fachleuten allgemein bekannt.

Es ist möglich, dass die Abschlussringe 13, 14 auf "konventionelle" Art und Weise hergestellt sind. Vorzugsweise sind die Abschlussringe 13, 14 jedoch - ebenso wie die Maßverkörperung 15 - mittels eines additiven Herstellungsverfahrens hergestellt. Unabhängig von der Art und Weise der Herstellung bestehen die Abschlussringe 13, 14 jedoch in aller Regel aus Kupfer oder Aluminium.

Zusammengefasst betrifft die vorliegende Erfindung somit folgenden Sachverhalt:
Eine elektrische Maschine 1 weist einen Rotor 2 und einen Stator 3 auf. Der Rotor 2 ist drehfest auf einer in Lagern 5 gelagerten Rotorwelle 4 angeordnet, so dass der Rotor 2 zusammen mit der Rotorwelle 3 um eine Rotationsachse 6 rotierbar ist. Die elektrische Maschine 1 weist weiterhin ein Gehäuse 7 auf, das einen um die Rotationsachse 6 umlaufenden Mantel 8 und an den Enden des Mantels 8 zwei im Wesentlichen orthogonal zur Rotationsachse 6 orientierte Stirnelemente 9, 10 aufweist, so dass das Gehäuse 7 einen Innenraum 11 begrenzt, innerhalb dessen der Rotor 2 und der Stator 3 angeordnet sind. Der Rotor 2 weist an seinen axialen Enden jeweils einen Abschlussring 13, 14 auf. Auf einen der Abschlussringe 13, 14 ist mittels eines additiven Herstellungsverfahrens eine Maßverkörperung 15 aufgebracht. Am Gehäuse 7 oder am Stator 3 ist innerhalb des von dem Gehäuse 7 begrenzten Innenraums 11 eine mit der Maßverkörperung 15 zusammenwirkende Sensoreinrichtung 16 angeordnet, mittels derer die Drehstellung ϕ und/oder die Drehzahl n des Rotors 2 ermittelbar ist.

Die vorliegende Erfindung weist viele Vorteile auf. Insbesondere kann innerhalb einer elektrischen Maschine 1 auf einfache und robuste Weise eine Sensorik zur Erfassung eines Lage- oder Drehzahlsignals realisiert werden. Ein eigenständiger Geber ist nicht erforderlich. Die Sensorik arbeitet verschleißfrei und ist auch in Verbindung mit sicherheitsgerichteten Eigenschaften und Funktionen realisierbar.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine,
- wobei die elektrische Maschine einen Rotor (2) und einen Stator (3) aufweist,
- wobei der Rotor (2) drehfest auf einer in Lagern (5) gelagerten Rotorwelle (4) angeordnet ist, so dass der Rotor (2) zusammen mit der Rotorwelle (3) um eine Rotationsachse (6) rotierbar ist,
- wobei die elektrische Maschine ein Gehäuse (7) aufweist, das einen um die Rotationsachse (6) umlaufenden Mantel (8) und an den Enden des Mantels (8) zwei im Wesentlichen orthogonal zur Rotationsachse (6) orientierte Stirnelemente (9, 10) aufweist, so dass das Gehäuse (7) einen Innenraum (11) begrenzt, innerhalb dessen der Rotor (2) und der Stator (3) angeordnet sind,
- wobei der Rotor (2) an seinen axialen Enden jeweils einen Abschlussring (13, 14) aufweist,
**dadurch gekennzeichnet,**
- **dass** auf einen der Abschlussringe (13, 14) mittels eines additiven Herstellungsverfahrens eine Maßverkörperung (15) aufgebracht ist und
- **dass** am Gehäuse (7) oder am Stator (3) innerhalb des von dem Gehäuse (7) begrenzten Innenraums (11) eine mit der Maßverkörperung (15) zusammenwirkende Sensoreinrichtung (16) angeordnet ist, mittels derer die Drehstellung (ϕ) und/oder die Drehzahl (n) des Rotors (2) ermittelbar ist.

2. Elektrische Maschine nach Anspruch 1,
**dadurch gekennzeichnet, dass** die Sensoreinrichtung (16) einen mit der Maßverkörperung (15) zur Erfassung eines Empfangssignals (E) zusammenwirkenden Sensor (19) umfasst.

3. Elektrische Maschine nach Anspruch 1 oder 2,
**dadurch gekennzeichnet,**
- **dass** die Sensoreinrichtung (16) ein Anregungselement (18) und einen Sensor (19) aufweist,
- **dass** die Maßverkörperung (15) aus einem mittels des Anregungselementes (18) angeregbaren Material besteht,
- **dass** die Maßverkörperung (15) mittels des Anregungselementes (18) angeregt wird und
- **dass** mittels des Sensors (19) ein Empfangssignal (E) erfasst wird, aus dem die die Drehstellung (ϕ) und/oder die Drehzahl (n) des Rotors (2) ermittelbar ist.

4. Elektrische Maschine nach Anspruch 3,
**dadurch gekennzeichnet, dass** die Maßverkörperung (15) aus einem magnetisierbaren, aber nicht permanentmagnetischen Material besteht und mittels des Anregungselementes (18) magnetisiert wird.

5. Elektrische Maschine nach einem der obigen Ansprüche,
**dadurch gekennzeichne**t, dass die elektrische Maschine als Asynchronmaschine ausgebildet ist und die Abschlussringe (13, 14) als Kurzschlussringe ausgebildet sind oder dass die elektrische Maschine als Synchronmaschine ausgebildet ist und die Abschlussringe (13, 14) als Druckringe ausgebildet sind.

6. Elektrische Maschine nach einem der obigen Ansprüche,
**dadurch gekennzeichnet, dass** die Abschlussringe (13, 14) selbst ebenfalls mittels eines additiven Herstellungsverfahrens hergestellt sind.

7. Elektrische Maschine nach einem der obigen Ansprüche,
**dadurch gekennzeichnet, dass** die Abschlussringe (13, 14) aus Kupfer oder Aluminium bestehen und dass die Maßverkörperung (15) aus einem ferromagnetischen Material, Kupfer oder Aluminium besteht.

8. Elektrische Maschine nach einem der obigen Ansprüche,
**dadurch gekennzeichnet, dass** die Sensoreinrichtung (16) zum Stator (3) hin mittels einer Schutzwand (17) elektromagnetisch abgeschirmt ist.
